# EUROPÄISCHE PATENTANMELDUNG

(11) **EP 0 540 922 A1**
(43) Veröffentlichungstag der Anmeldung: **12.05.1993**
(21) Anmeldenummer: 92117735.8
(22) Anmeldetag: 16.10.1992
(51) Int. Cl.: B60R 22/46

(54) **Gurtstraffer für Fahrzeug-Sicherheitsgurtsysteme**

(30) Priorität: 07.11.1991 DE 4136623
(71) Anmelder: TRW REPA GMBH, D-73553 Alfdorf (DE)
(72) Erfinder: Föhl, Artur, W-7060 Schorndorf (DE)
(74) Vertreter: Degwert, Hartmut, Dipl.-Phys.

(57) **Zusammenfassung**

In einem Fahrzeug-Sicherheitsgurtsystem wird an einem zwischen einem Umlenkbeschlag und dem Gurtaufroller verlaufenden Gurtbandabschnitt (10) eine Greifeinrichtung (16) angeordnet. Im Ruhezustand ist das Gurtband freigängig zwischen den einander gegenüberliegenden Klemmelementen (18, 20) der Greifeinrichtung (16) hindurchgeführt. Die Greifeinrichtung (16) ist über ein Zugseil (38) an einen Gurtstraffer-Antrieb angeschlossen, der pyrotechnisch oder mechanisch ausgebildet sein kann. Die Klemmelemente (18, 20) werden durch Federn (30, 32) gegen das Gurtband beaufschlagt, wodurch eine gleichmäßige Anlage an diesem gewährleistet wird.

## Beschreibung

Die Erfindung betrifft einen Gurtstraffer für Fahrzeug-Sicherheitsgurtsysteme mit einem frei zwischen einem Gurtaufroller und einem Umlenkbeschlag verlaufenden Gurtbandabschnitt und mit einem Gurtstraffer-Antrieb, wobei an dem Gurtbandabschnitt eine Greifeinrichtung mit zwei einander im Abstand gegenüberliegenden Klemmelementen, zwischen denen das Gurtband freigängig hindurchgeführt ist, angeordnet ist, der GurtstrafferAntrieb über ein Zugübertragungselement an der Greifeinrichtung angeschlossen ist und die Klemmelemente in einer Ruhestellung im Abstand von dem zwischen ihnen verlaufenden Gurtbandabschnitt durch Haltemittel gehalten sind, die durch die bei Aktivierung des Gurtstraffer-Antriebes über das Zugübertragungselement auf die Greifeinrichtung ausgeübte Zugkraft überwindbar sind.

Derartige Gurtstraffer sind aus der DE 34 13 488 bekannt. Deren Klemmelemente werden mittels eines elastischen Bügels auseinandergespreizt und über einen Ansatz in bezug auf die Längserstreckung der Klemmteile auf der einen Seite in einer Nut gelagert und auf der andere Seite über Abreißglieder gehalten. Bei dieser Konstruktion besteht die Gefahr, daß die Klemmelemente beim Straffervorgang nicht flächig auf das Gurtband gebracht werden.

Der Erfindung liegt die Aufgabe zugrunde, bei einem Gurtstraffer der eingangs angegebenen Art eine Konstruktion anzugeben, durch die die Klemmelemente flächig und in reproduzierbarer Weise an dem Gurtband zur Anlage kommen, um dieses zu schonen und die Belastbarkeit zu erhöhen.

Diese Aufgabe wird bei einem Gurtstraffer der eingangs angegebenen Art dadurch gelöst, daß die Klemmelemente durch Federkraft in eine Greifstellung am Gurtband beaufschlagt sind.

Die Klemmelemente werden dann durch die Federkraft in Anlage an das Gurtband gedrückt, sobald nach Aktivierung des Gurtstraffer-Antriebs die Haltemittel überwunden sind, durch welche die Klemmelemente bis zu diesem Zeitpunkt in ihrer Ruhestellung in Abstand vom Gurtband gehalten werden.

Eine selbständige Verstärkung der Klemmwirkung ergibt sich, wenn die Klemmelemente in an sich bekannter Weise keilförmig mit zum Gurtband geneigter Rückenfläche ausgebildet und an ihrer Rückenfläche auf der Innenwandung des Aufnahmeteils abgestützt sind, an dem das Zugübertragungselement angeschlossen ist.

Weitere Vorteile und Merkmale der Erfindung ergeben sich aus der folgenden Beschreibung und aus der Zeichnung, auf die Bezug genommen wird.

In der Zeichnung zeigen:
- Fig. 1: eine Perspektivansicht eines Fahrzeug-Sicherheitsgurtsystems mit Gurtstraffer;
- Fig. 2: eine Schnittansicht einer Greifeinrichtung des Gurtstraffers nach Fig. 1;
- Fig. 3: eine Draufsicht der in Fig. 2 gezeigten Greifeinrichtung;
- Fig. 4: eine Perspektivansicht zweier Klemmelemente der in den Fig. 2 und 3 gezeigten Greifeinrichtung;
- Fig. 5: einen Längsschnitt einer Kolben/Zylinder-Rücklauf-Sperreinrichtung in einer ersten Ausführung;
- Fig. 6: einen Längsschnitt einer zweiten Ausführungsform der Rücklauf-Sperreinrichtung;
- Fig. 7: einen Längsschnitt einer kombinierten Antrieb/Rücklaufsperre-Baugruppe; und
- Fig. 8: einen Querschnitt durch Kolben und Zylinderwandung einer Rücklauf-Sperreinrichtung nach erfolgter Gurtstraffung und Energiewandlung.

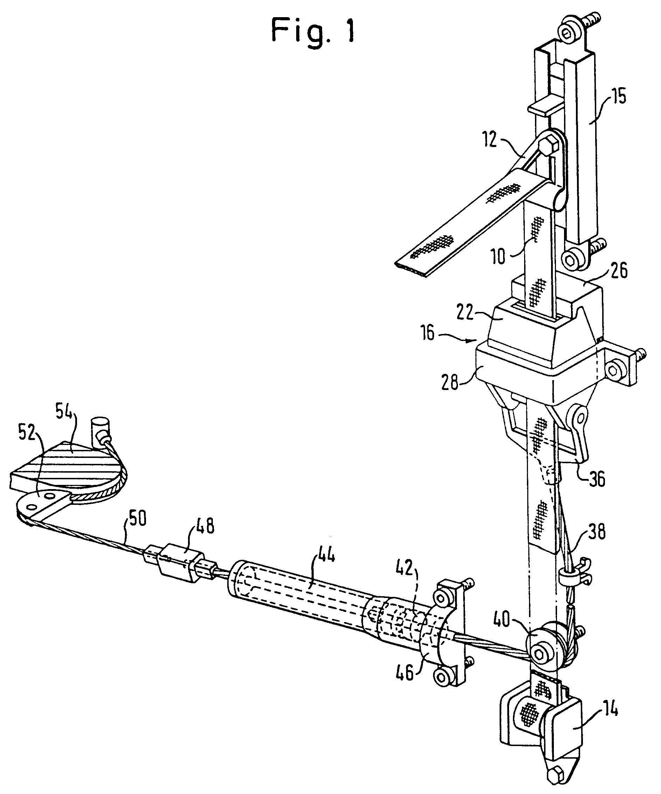

Bei dem in Fig. 1 gezeigten Sicherheitsgurtsystem verläuft ein Gurtbandabschnitt 10 annähernd senkrecht von einem Umlenkbeschlag 12 zu einem Gurtaufroller 14, der in der B-Säule des Fahrzeugs angebracht ist, ebenso wie ein Höhenversteller 15, an dem der Umlenkbeschlag 12 höhenverstellbar gelagert ist.

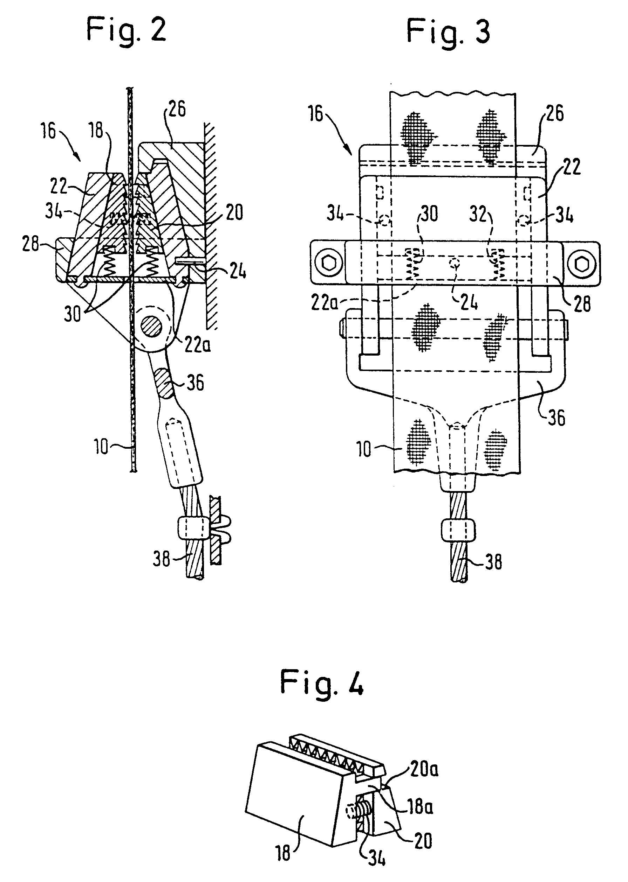

An dem Gurtbandabschnitt 10 ist eine Greifeinrichtung 16 angeordnet. Diese Greifeinrichtung 16, die in den Fig. 2, 3 und 4 im einzelnen gezeigt ist, besteht aus zwei keilförmigen Klemmteilen 18, 20, die beiderseits des Gurtbandabschnitts 10 in geringem Abstand von diesem angeordnet sind, und einem Aufnahmeteil 22, in dessen Innerem die Klemmteile 18, 20 aufgenommen sind und an dessen zur Richtung des Gurtbandverlaufs geneigten Innenflächen die unter gleichem Winkel zur Richtung des Gurtbandverlaufs geneigten Rückenflächen der Klemmteile 18, 20 abgestützt sind. Das Aufnahmeteil 22 ist bei der in den Figuren gezeigten Ruhestellung durch einen Scherstift 24 an einem Sockel 26 festgelegt, der am Fahrzeugaufbau verankert ist. Ein mittels Schrauben am Fahrzeugaufbau befestigter Haltebügel 28 umgreift das Aufnahmeteil 22 und hält dieses in einer definierten Ruhestellung. Der Sockel 26 bildet an seinem in der Zeichnung oberen Ende einen Anschlag für die benachbarte Stirnfläche des Klemmteils 20. Dieses ist, wie in Fig. 4 ersichtlich ist, mit dem gegenüberliegenden Klemmteil 18 durch seitliche Leisten 18a, die jeweils in eine entsprechende Nut 20a des Klemmteils 20 eingreifen, kraftschlüssig verbunden. Jedes Klemmteil 18, 20 wird durch zwei Druckfedern 30, 32 in Richtung des Gurtbandverlaufs zum Umlenkbeschlag 12 hin vorbelastet, wodurch die obere Stirnfläche des Klemmteils 20 am Anschlag des Sockels 26 in Anlage gehalten wird. Die Druckfedern 30, 32 sind auf ihrer von den Klemmteilen 18, 20 abgewandten Seite an einer Bodenplatte 22a des Aufnahmeteils 22 abgestützt. Die Klemmteile 18, 20 werden durch zwei beiderseits des Gurtbandes angeordnete Druckfedern 34 auseinander und in Anlage an die Innenflächen des Aufnahmeteils 22 gedrückt. Der Gurtbandabschnitt 10 verläuft frei und in geringem Abstand von den vorzugsweise mit einer Verzahnung versehenen Angriffsflächen der Klemmelemente 18, 20 zwischen diesen hindurch.

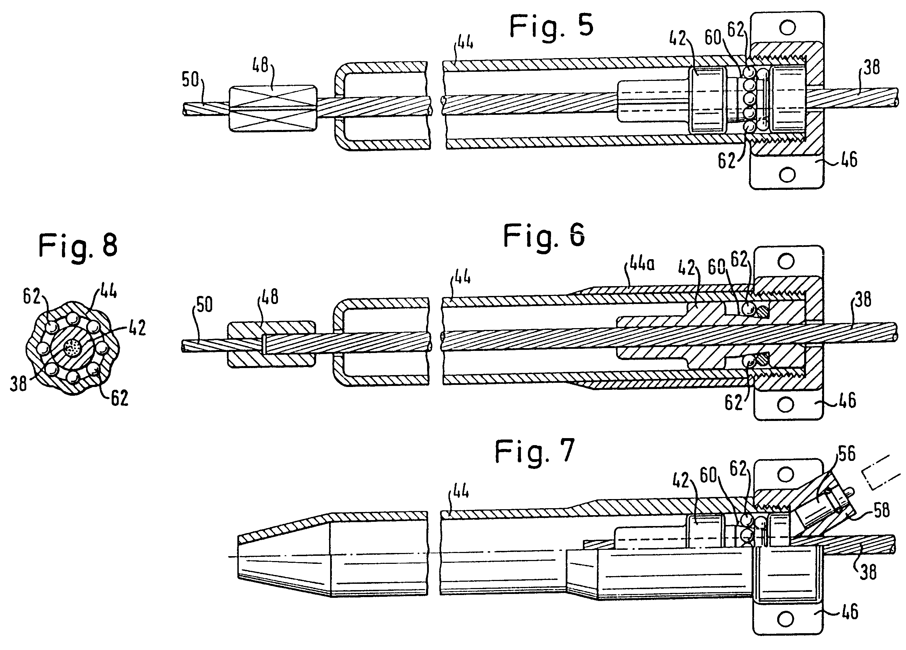

An dem Aufnahmeteil 22 ist mittels eines schwenkbaren Bügels 36 ein Zugübertragungselement in Form eines Zugseils 38 angeschlossen. Das Zugseil 38 ist über eine Umlenkrolle 40 geführt und an seinem von der Greifeinrichtung 16 abgewandten Ende mit einem Kolben 42 verbunden, der verschiebbar in der Bohrung eines Zylinders 44 aufgenommen ist. Der Zylinder 44 ist mittels einer Montageeinrichtung 46 am Fahrzeugaufbau festgelegt. Das Zugseil 38 ist, wie in den Fig. 5 und 6 ersichtlich, durch den Kolben 42 axial hindurchgeführt und über eine Verbindungseinrichtung 48 mit einem weiteren Zugseil 50 verbunden. Dieses Zugseil 50 ist über eine Umlenkeinrichtung 52 zu einem Fahrzeugteil 54 im vorderen Bereich des Fahrzeugs umgelenkt und bogenförmig um dieses herumgeführt sowie an seinem freien Ende an einem starren Fahrzeugaufbaubereich verankert. Das Fahrzeugteil 54, beispielsweise ein Teil des Getriebeblocks des Fahrzeugs, führt bei einer unfallbedingten Verformung des vorderen Fahrzeugbereichs eine Relativbewegung zur Fahrgastzelle des Fahrzeugs aus, an welcher das Ende des Zugseils 50 verankert ist. Durch diese Relativbewegung wird die Länge des Zugseils 50 zwischen der Umlenkeinrichtung 52 und dem Kolben 42 verkürzt, so daß ein Zug über das Zugseil 38 und den Bügel 36 auf das Aufnahmeteil 22 übertragen wird. Bei dieser Ausführungsform ist also der Gurtstraffer-Antrieb von einem Fahrzeugteil abgeleitet, welches bei einer unfallbedingten Verformung des vorderen Fahrzeugbereiches eine Relativbewegung zur Fahrgastzelle des Fahrzeugs ausführt.

Bei der in Fig. 7 gezeigten Ausführungsform ist hingegen ein pyrotechnischer Antrieb vorgesehen, mit einer Gasgeneratorpatrone 56, die in einen an das eine Ende des Zylinders 44 angeschlossenen Rohrstutzen 58 eingesetzt ist, welcher in den Zylinderraum vor dem Kolben 42 mündet. Bei Zündung der Gasgeneratorpatrone 56 wird der Kolben 42 durch die dann erzeugten Druckgase im Zylinder 44 vorgeschoben, so daß ein Zug auf das Zugseil 38 ausgeübt wird.

Wenn bei Aktivierung des Gurtstraffer-Antriebs eine Zugkraft auf das Aufnahmeteil 22 ausgeübt wird, wird zunächst der Scherstift 24 abgeschert. Alsdann wird das Aufnahmeteil 22 abwärts bewegt, wobei zugleich die Klemmelemente 18, 20 durch die Druckfedern 30, 32 vorgeschoben werden, so daß ihre Angriffsflächen mit dem Gurtband in Eingriff gelangen, da die Druckfedern 30, 32 stärker dimensioniert sind als die Druckfedern 34. Durch die Keilform der Klemmelemente 18, 20 wird bei weiterer Abwärtsbewegung des Aufnahmeteils 22 die Klemmung des Gurtbandes selbsttätig verstärkt. Das durch die Greifeinrichtung erfaßte Gurtband wird nun mitgenommen und in Richtung des Gurtaufrollers 14 verlagert, wobei die Gurtlose aus dem Gurtsystem herausgezogen wird. Der Hub des Gurtstraffers ist spätestens dann beendet, wenn der Kolben 42 am freien Ende des Zylinders 44 angekommen ist. Bei der in Fig. 1 gezeigten Ausführungsform ist die Verbindungseinrichtung 48 so dimensioniert, daß sie dann, bei weiterer Steigerung der Zugkraft über das Zugseil 50, nachgibt und das Zugseil 50 von dem Zugseil 38 abkoppelt.

Der Kolben 42 ist in dem Zylinder 44 in Richtung zu dessen freiem Ende hin, also in der Rückstrammrichtung, frei beweglich. In der entgegengesetzten Richtung wird seine Bewegung jedoch durch ein Kugel-Klemmgesperre behindert. Dieses Kugel-Klemmgesperre besteht aus mehreren über den Umfang einer Rampenfläche 60 am Kolben 42 verteilten Kugeln 62, deren Außenumfang der Innenwandung des Zylinders 44 gegenüberliegt. Durch die Rampenfläche 60 des Kolbens 42 werden die Kugeln 62 bei der Rückbewegung des Kolbens 42 in Richtung der Umlenkrolle 40 radial auswärts gegen die Innenwandung des Zylinders 44 gedrückt. Eine Weiterbewegung ist nur unter plastischer Verformung der Wandung des Zylinders 44 möglich. Bei dieser plastischen Verformung wird Arbeit verrichtet, so daß eine zum Abbau von Lastspitzen im Gurtband erwünschte Energiewandlung stattfindet, sobald ein vorbestimmter Wert der Zuglast im Zugseil 38 überschritten wird. Die gezeigte Ausbildung von Kolben 42 und Zylinder 44 bildet somit eine Rücklauf-Sperreinrichtung und zugleich einen Energiewandler zum Abbau von Lastspitzen im Gurtband. Fig. 8 zeigt die plastische Verformung der Wandung des Zylinders 44.

Bei den in Fig. 6 und 7 gezeigten Ausführungsformen ist das der Montageeinrichtung 46 benachbarte Ende des Zylinders 44 verstärkt, so daß die Schwelle angehoben wird, ab der eine plastische Verformung stattfindet. Durch Bemessung der Wandstärke des Zylinders 44 kann der Energiewandler mit der gewünschten Kennlinie ausgestattet werden. Bei der Ausführungsform nach Fig. 6 erfolgt die Verstärkung des Zylinders 44 durch eine aufgeschobene Hülse 44a; bei der Ausführungsform nach Fig. 7 ist in dem entsprechenden Bereich des Zylinders 44 seine Wandstärke vergrößert.

Außer den beschriebenen Formen eines Gurtstraffer-Antriebs kommen andere bekannte Ausführungen in Betracht, beispielsweise mechanische Antriebe mit einer gespannt gehaltenen Feder.

## Patentansprüche

1. Gurtstraffer für Fahrzeug-Sicherheitsgurtsysteme mit einem frei zwischen einem Gurtaufroller und einem Umlenkbeschlag verlaufenden Gurtbandabschnitt und mit einem Gurtstraffer-Antrieb, wobei
an dem Gurtbandabschnitt (10) eine Greifeinrichtung (16) mit zwei einander im Abstand gegenüberliegenden Klemmelementen (18, 20), zwischen denen das Gurtband freigängig hindurchgeführt ist, angeordnet ist,
der Gurtstraffer-Antrieb über ein Zugübertragungselement (36, 38) an der Greifeinrichtung (16) angeschlossen ist und die Klemmelemente (18, 20) in einer Ruhestellung im Abstand von dem zwischen ihnen verlaufenden Gurtbandabschnitt (10) durch Haltemittel (24) gehalten sind, die durch die bei Aktivierung des Gurtstraffer-Antriebes über das Zugübertragungselement (36, 38) auf die Greifeinrichtung (16) ausgeübte Zugkraft überwindbar sind,
**dadurch gekennzeichnet**, daß die Klemmelemente (18, 20) durch Federkraft (30, 32) in eine Greifstellung am Gurtband beaufschlagt sind.

2. Gurtstraffer nach Anspruch 1, **dadurch gekennzeichnet**, daß die Klemmelemente (18, 20) keilförmig mit zum Gurtband geneigter Rückenfläche ausgebildet und an ihrer Rückenfläche auf der Innenwandung eines Aufnahmeteils (22) abgestützt sind, an dem das Zugübertragungselement (36) angeschlossen ist.

3. Gurtstraffer nach Anspruch 2, **dadurch gekennzeichnet**, daß die Federkraft in Richtung des Gurtbandverlaufes auf die Klemmelemente (18, 20) einwirkt und die Klemmelemente in ihrer Ruhestellung bis zu einem ortsfesten Anschlag entgegen der Richtung der über das Zugübertragungselement (36, 38) auszuübenden Zugkraft vorschiebt.

4. Gurtstraffer nach Anspruch 2 oder 3, **dadurch gekennzeichnet**, daß das Aufnahmeteil (22) durch abscherbare Haltemittel (24) am Fahrzeugaufbau festgelegt ist.
